# EUROPÄISCHE PATENTSCHRIFT

(11) **EP 3 758 977 B1**
(45) Veröffentlichungstag und Bekanntmachung des Hinweises auf die Patenterteilung: **07.06.2023**
(21) Anmeldenummer: 19708517.8
(22) Anmeldetag: 01.03.2019
(51) Int. Cl.: B60L 53/16, B60L 53/35, B60L 53/37

(54) **ENDEFFEKTOR, ELEKTRISCHE LADEEINRICHTUNG UND VERFAHREN**
END EFFECTOR, ELECTRICAL CHARGING DEVICE AND METHOD
EFFECTEUR TERMINAL, ÉQUIPEMENT ÉLECTRIQUE DE CHARGE ET PROCÉDÉ

(30) Priorität: 02.03.2018 DE 102018104845
(43) Veröffentlichungstag der Anmeldung: 06.01.2021
(73) Patentinhaber: KUKA Aktiengesellschaft, 86165 Augsburg (DE)
(72) Erfinder: SETTELE, Norbert, 86574 Petersdorf-Wilprechtszell (DE); ADEN, Simon, 30419 Hannover (DE); CLAASSEN, Lennart, 30177 Hannover (DE); SCHOOB, Andreas, 30161 Hannover (DE); TAUSCHER, Sebastian, 30173 Hannover (DE); KOTLARSKI, Jens, 30989 Gehrden (DE); DAGEN, Matthias, 30989 Gehrden (DE); ORTMAIER, Tobias, 30966 Hemmingen (DE)
(74) Vertreter: Oelke, Jochen
(86) Internationale Anmeldenummer: PCT/EP2019/055159
(87) Internationale Veröffentlichungsnummer: WO 2019/166636

(56) Entgegenhaltungen:
- EP-A1- 3 626 411
- DE-A1-102012 216 980
- DE-A1-102014 226 357
- DE-A1-102015 225 988
- US-A1- 2014 067 660
- US-A1- 2017 008 411

## Beschreibung

Die Erfindung betrifft einen Endeffektor für eine elektrische Ladeeinrichtung, insbesondere für Fahrzeugbatterien, und die elektrische Ladeeinrichtung sowie ein Verfahren.

Aus der US 7,999,506 B1 ist eine elektrische Ladeeinrichtung zum Laden eines Energiespeichers eines Elektrofahrzeugs bekannt, die einen mehrachsigen Gelenkarmroboter mit einem an dessen Abtriebselement montierten elektrischen Ladestecker zeigt. Diese Ladeeinrichtung hat Nachteile hinsichtlich Bauaufwand und Flexibilität.

Aus der DE 10 2012 216 980 A1 ist eine von einem Roboter bediente Fahrzeugladestation bekannt, wobei eine Basisplatte, ein Standrohr, ein Roboterarm , ein Greiforgan vorhanden sind und der Roboterarm das Greiforgan trägt.

Die DE 10 2015 225 988 A1 beschreibt ein Verfahren zur Durchführung eines Energieversorgungsvorgangs zwischen einer Energieversorgungseinheit und einem Kraftfahrzeug. Dabei wird eine Position einer fahrzeugseitigen Energieversorgungs-Schnittstelle ermittelt und eine automatisierte Kopplung durch einen Roboter zwischen der Schnittstelle und der Energieversorgungseinheit durchgeführt.

Aus der US 2014/0067660 A1 ist ein automatisches Fahrzeugladesystem bekannt, bei dem ein Ladestecker ein einem Ausleger und Balken mehrfach beweglich befestigt ist und den Stecker automatisch einer Ladebuchse eines Kraftfahrzeugs zustellen kann.

Die US 2017/0008411 A1 zeigt einen Batterieladeapparat mit Ladekörper, Roboterarm und Ladestecker. Der Ladestecker wird vom Roboter aus einer Position in eine Ladeposition am elektrischen Kraftfahrzeug gebracht. Ein gattungsgemäßer Endeffektor ist aus der nachveröffentlichten EP3626411 A1 bekannnt.

Es ist Aufgabe der vorliegenden Erfindung, eine verbesserte elektrische Ladetechnik aufzuzeigen.

Die Erfindung löst diese Aufgabe mit den Merkmalen in den selbstständigen Ansprüchen.

Die beanspruchte elektrische Ladetechnik, d.h. der Endeffektor, die elektrische Ladeeinrichtung und das Verfahren, haben verschiedene Vorteile.

Die beanspruchte elektrische Ladetechnik, insbesondere die Ladeeinrichtung, dient zum automatischen Ankuppeln des Ladesteckers an die Ladebuchse eines im Arbeitsbereich bereit stehenden Fahrzeugs und ggf. auch zum automatischen Entkuppeln. In Verbindung mit einer elektrischen Stromversorgung dient die elektrische Ladeeinrichtung auch zum Laden eines elektrischen Energiespeichers des Fahrzeugs, insbesondere eines Elektromobils. Die Ladeeinrichtung weist eine Positioniervorrichtung und einen Endeffektor auf. Diese können einzeln oder mehrfach vorhanden sein.

Die Ladeeinrichtung kann auch eine Kommunikationseinrichtung zur bevorzugt drahtlosen Kommunikation, z.B. per Funk, aufweisen. Sie kann z.B. in eine car-to-infrastructure-Kommunikation eingebunden sein, was für führergesteuerte und autonome Fahrzeuge von Vorteil ist.

Die elektrische Ladeeinrichtung erhöht den Komfort für den Fahrzeugführer und steigert die Akzeptanz für elektrisch betriebene Fahrzeuge, insbesondere Elektromobile, Hybridfahrzeuge oder dgl.. Sie entlastet den evtl. unerfahrenen Fahrzeugführer von einem manuellen und lästigen An- und Entkuppeln. Sie reduziert auch die Fehleranfälligkeit.

Gegenüber der eingangs genannten elektrischen Ladeeinrichtung werden eine Minderung des Bau-, Steuer- und Kostenaufwands und eine höhere Flexibilität erreicht.

Die elektrische Ladeeinrichtung kann i.V.m. einer geeigneten Steuerung und Sensorik den Ladezustand des Energiespeichers erfassen. Sie kann bei Erreichen des gewünschten Ladezustands den Ladevorgang selbsttätig beenden und den Ladestecker entkuppeln sowie in eine Bereitschaftsstellung bewegen. In einer anderen Ausführung kann das Fahrzeug den Ladezustand überwachen und der Ladeeinrichtung die Befehle zum Ankuppeln/Entkuppeln senden. Dies ist über die Kommunikationseinrichtung möglich, z.B. per WLAN, Bluetooth oder dgl. Bei Fahrzeugen ohne entsprechende Schnittstelle kann die Ladeeinrichtung direkt über eine App getriggert werden.

Die elektrische Ladeeinrichtung kann bei geeigneter Ausbildung mehrere Arbeitsbereiche haben und kann mehrere Fahrzeuge bedienen, z.B. nacheinander oder gleichzeitig.

Die elektrische Ladeeinrichtung kann in geeigneter Weise, z.B. durch ein Signal des Fahrzeugs, eine optische Überwachung des Arbeits- und Parkbereichs oder dgl., die Existenz eines Fahrzeugs mit einem zu ladenden elektrischen Energiespeicher detektieren und den Ankuppel- und Ladevorgang selbsttätig starten und ggf. auch wieder beenden. Alternativ kann die elektrische Ladeeinrichtung mit einem kontaktierenden oder berührungslosen Bedienerbefehl, z.B. per Smartphone und einer App, gestartet werden.

Die elektrische Ladeeinrichtung kann ferner detektieren, wenn während des Ladevorgangs eine Störung auftritt oder droht und kann geeignete Sicherungsmaßnahme einleiten, z.B. einen Stop des Ladevorgangs und ggf. ein automatisches Entkuppeln des Ladesteckers. Durch eine Sensorik an der Ausgleichseinrichtung kann z.B. ein Einsteigen einer Person in das Fahrzeug erfasst werden. Andererseits kann das Fahrzeug ein Starten des Antriebs blockieren und bevorzugt drahtlos ein Signal zum Beenden des Ladevorgangs und zum automatischen Entkuppeln des Ladesteckers übermitteln. Die Ladeeinrichtung kann für die besagten Signale eine bevorzugt drahtlose Kommunikationseinrichtung aufweisen.

Der Endeffektor weist gemäß eines ersten Erfindungsgedankens eine eigene automatische Zustelleinrichtung für eine Halterung des elektrischen Ladesteckers auf. Die Zustelleinrichtung ist dazu vorgesehen und ausgebildet, den elektrischen Ladestecker automatisch und mit einer eigenen Zustellbewegung mit einer Ladebuchse am Elektrofahrzeug zu kuppeln und ggf. auch zu entkuppeln. Der Endeffektor weist einen Anschluss zur Verbindung mit einer Positioniervorrichtung der Ladeeinrichtung auf.

Der beanspruchte Endeffektor hat den Vorteil, dass er selbst einen geringen Bau-, Steuer- und Kostenaufwand hat. Die Kräfte zum An- und Abkuppeln des Ladesteckers können besser und effektiver aufgebracht werden. Andererseits kann die Positioniereinrichtung in ihrer Kinematik vereinfacht und verbilligt sowie leichter gesteuert werden.

Der Endeffektor kann eine technisch und wirtschaftlich eigenständige Einheit sein, bevorzugt ist der Endeffektor eine technisch und wirtschaftlich eigenständige Einheit. Er kann mittels seines Anschlusses an unterschiedliche Arten von Positioniervorrichtungen angebaut werden und ist dadurch flexibel einsetzbar. Er kann auch an kundenseitig evtl. vorhandene Positioniereinrichtungen durch Nachrüstung oder Umrüstung angebaut werden.

Der Anschluss hat eine flanschartige Form und lässt sich mit einem üblicherweise ebenfalls flanschartigen Abtriebselement der Positioniervorrichtung verbinden, vorzugsweise lösbar verbinden. Die Positioniervorrichtung kann eine oder mehrere Bewegungsachsen mit einer beliebigen Zahl und Kinematik haben.

Durch die eigene Zustelleinrichtung des Endeffektors kann die Zustellfunktion und Zustellbewegung vereinfacht und flexibilisiert werden. Eine Anpassung an unterschiedliche Arten von Fahrzeugen und an variierende Parkpositionen ist besser möglich.

Die Zustelleinrichtung ist mit einer Halterung für einen elektrischen Ladestecker verbunden. Dies erleichtert und flexibilisiert ebenfalls die Einsatzmöglichkeiten des Endeffektors. Die Halterung lässt sich für unterschiedliche Arten von Ladesteckern einsetzen und bedarfsweise anpassen. Sie kann auch bei Verfügbarkeit von unterschiedlichen Ladesteckern den benötigten Ladestecker selbsttätig greifen. Die Halterung ermöglicht auch eine wahlweise manuelle Bedienung.

Günstig ist außerdem, dass die Zustellbewegung direkt mit der Halterung erfolgt. Die Halterung bzw. der Ladestecker kann dadurch relativ zu der in Ruhe befindlichen Positioniervorrichtung bewegt werden. Dies kann eine kinematisch vereinfachte, insbesondere translatorischer bzw. lineare Zustellbewegung sein. Dank der eigenen Zustelleinrichtung des Endeffektors ist die Zustellung und Kuppelung des Ladesteckers leichter, kräftemäßig effektiver und besser steuerbar.

Die Zustellrichtung kann mit der zum Ankuppeln und evtl. Entkuppeln günstigen Steckrichtung des Ladesteckers fluchtend ausgerichtet werden. Die bevorzugt lineare Steckrichtung ist diejenige Richtung, in welcher der Ladestecker mit seinen Stromkontakten kupplungsgerecht zur Ladebuchse ausgerichtet ist und in welcher er auch bewegt wird.

Der Endeffektor weist erfindungsgemäß eine ein- und ausfahrbare Ausgleichseinrichtung für den Ladestecker, insbesondere die Halterung für den Ladestecker, auf. Die Ausgleichseinrichtung ist in mindestens einer Achse nachgiebig, insbesondere passiv, verstellbar und kann beim Laden und im gekuppelten Zustand von Ladestecker und Ladebuchse Relativbewegungen zwischen dem Fahrzeug und der Positioniervorrichtung ausgleichen. Dies sind insbesondere Relativbewegungen mit einer vertikalen Richtungskomponente. Sie entstehen z.B. beim Einfedern und Ausfedern des Fahrzeugs durch Laständerung, insbesondere durch Einsteigen oder Aussteigen von Passagieren oder bspw. durch sich absenkende Luftfedern. Die nachgiebige Ausgleichseinrichtung kompensiert solche Relativbewegungen und verhindert Beschädigungen an Ladestecker/Ladebuchse und am Endeffektor und dessen Teilen sowie auch an der Positioniervorrichtung.

Die Ausgleichseinrichtung zeichnet sich durch eine einfache konstruktive Ausführung und einen niedrigen Bauaufwand aus. In der bevorzugten Ausführungsform führt sie beim Ein- und Ausfahren eine passive Bewegung aus und kommt ohne eigene Antriebs- und Steuertechnik aus. Alternativ kann die Ausgleichseinrichtung mit einer Antriebs- und ggf. Steuertechnik kombiniert werden. Sie kann auch für aktive ein- oder mehrachsige Positionierbewegungen, z.B. in der vertikalen z-Raumachse, eingesetzt werden. Für eine passive Ausgleichs- und Folgebewegung mit dem Fahrzeug kann die die Ausgleichseinrichtung von ihrem Antrieb an- und abgekoppelt oder in anderer Weise steuerbar freigeschaltet werden.

Die Ausgleichseinrichtung eignet sich besonders für einen Endeffektor mit der vorgenannten eigenen Zustelleinrichtung und dem Anschluss zur Verbindung mit einer Positioniervorrichtung. Die Ausgleichseinrichtung kann aber auch mit anderen Endeffektoren ohne eine eigene Zustelleinrichtung eingesetzt werden. Sie kann außerdem direkt zwischen einem Ladestecker und einem Abtriebselement einer Positioniervorrichtung, z.B. einem mehrachsigen Roboter mit translatorischen und/oder rotatorischen Roboterachsen bzw. Bewegungsachsen, eingesetzt werden.

In der bevorzugten Ausführungsform eines Endeffektors mit einer eigenen Zustelleinrichtung kann die Ausgleichseinrichtung der Zustelleinrichtung vorgeschaltet sein und kann den Anschluss zur Verbindung mit der Positioniervorrichtung aufweisen. Die im Kuppelzustand mit der Ladebuchse starr verbundene Zustelleinrichtung kann durch die Ausgleichseinrichtung gegenüber der Positioniervorrichtung kinematisch entkoppelt werden. Die Zustelleinrichtung kann den Fahrzeugbewegungen folgen und kann sich dabei dank der Ausgleichseinrichtung relativ zu der Positioniervorrichtung bewegen. Die Positioniervorrichtung kann eine starre Pose einnehmen und braucht den Fahrzeugbewegungen selbst nicht zu folgen. Die Positioniervorrichtung wird dadurch in ihrer Kinematik und Steuerung vereinfacht. Sie wird durch die Ausgleichseinrichtung vor eventuellen Überlastungen und Beschädigungen geschützt.

Die Ausgleichseinrichtung kann in einer oder mehreren Achsen nachgiebig verstellbar sein. In den meisten Fällen genügt eine einachsige Verstellbarkeit, die z.B. translatorisch sein kann. Dies betrifft insbesondere Ausgleichsbewegungen in der vertikalen Raumachse bei eingenommener Betriebs- oder Kupplungsstellung. Die Ausgleichseinrichtung kann hierfür ein längenverstellbares Ausgleichselement aufweisen. Dies kann z.B. als Teleskopstange ausgebildet sein. Bevorzugt ist das längenverstellbare Ausgleichselement passiv ausgebildet ist.

Die Ausgleichseinrichtung kann federgelagert sein, insbesondere um die nachgiebige Verstellbarkeit in einer oder mehreren Achsen zu erreichen. Hierfür kann die Ausgleichseinrichtung bzw. das längenverstellbare Ausgleichselement, insbesondere die Teleskopstange mit einer Federvorrichtung versehen sein. Bevorzugt ist die Ausgleichseinrichtung derart ausgestaltet und eingerichtet, dass auf den Endeffektor wirkende Kräfte bzw. Bewegungen, insbesondere durch das Fahrzeug, insbesondere beim Ladevorgang, passiv ausgeglichen werden. Mit anderen Worten kann der Endeffektor lediglich durch die auf ihn wirkenden äußeren Kräfte verlagert werden, bevorzugt ohne eine Aktivierung eines der Antriebe der Positioniervorrichtung.

Die Ausgleichseinrichtung wird vorteilhaft durch die Federeinrichtung bzw. Federlagerung in einer Ausgangsposition gehalten bzw. gelagert, wobei vorteilhaft die Ausgangsposition zwischen einer ausgefahrenen Stellung und einer eingefahrenen Endstellung liegt. Bevorzugt handelt es sich hierbei um eine von einem bzw. beiden bzw. allen Anschlägen bzw. Endanschlägen der Ausgleichseinrichtung verschiedenen bzw. entfernten Position, bevorzugt eine Mittelstellung, wodurch eine Federlagerung bzw. ein Ausgleich in alle Richtungen ermöglicht ist. Hierzu besteht die Federeinrichtung bzw. Federlagerung aus wenigstens einem oder mehreren, bevorzugt aus zwei, Federelement/-en.

Die Ausgleichseinrichtung kann um mehr als 4cm beweglich bzw. gelagert sein, bevorzugt um 6-14cm, besonders bevorzugt um 8-10cm. Demnach sind die (End-)Anschläge der Ausgleichseinrichtung um diesen Abstand voneinander entfernt. Die (End-)Anschläge können durch vorhandene Anschläge ausgebildet sein. Bevorzugt weist die Ausgleichseinrichtung oder das Ausgleichselement wenigstens zwei, bevorzugt genau zwei Endanschläge, welche die ausgefahrenen Stellung und die eingefahrenen Endstellung definieren, auf. Auch können sich die (End)-Anschläge (lediglich) durch die Ausgestaltung der Ausgleichseinrichtung bzw. der Teleskopstange ergeben und somit als keine tatsächlich vorhandenen (End-)Anschläge ausgebildet sein.

Die Ausgleichseinrichtung kann in mindestens einer vorgegebenen Stellung auf ihrem Bewegungsweg arretiert werden. Dies kann vorzugsweise die eingefahrene Endstellung sein. Die eingefahrene Endstellung muss jedoch keine Arretierung aufweisen. Die Ausgleichseinrichtung kann eine bevorzugt automatisch steuerbare Arretierung für die zumindest eine vorgegebene Stellung aufweisen. Sie kann alternativ manuell bedienbar sein.

Für die Ausbildung der automatischen Arretierung gibt es verschiedene konstruktive und funktionale Möglichkeiten. Sie kann z.B. ein eigenständig angetriebenes und steuerbares Arretiermittel, z.B. einen angetriebenen Riegel, aufweisen. In einer anderen Ausführungsform kann die Arretierung als Bajonettverschluss, z.B. mit Riegelbolzen und Riegelnut, ausgebildet sein. In dieser Variante kann die Arretierung von der Positioniervorrichtung betätigt werden, z.B. durch deren Drehbewegung.

Die Ausgleichseinrichtung kann sich bei gelöster Arretierung frei bewegen und kann den Fahrzeugbewegungen folgen. Zum Ankuppeln und Entkuppeln des Ladesteckers an bzw. von der Ladebuchse befindet sich die Ausgleichseinrichtung bevorzugt in ihrer eingefahrenen und arretierten Endstellung. Die Positioniervorrichtung bringt dazu die eventuell ausgefahrene Ausgleichseinrichtung in die eingefahrene Endstellung. In dieser wird die Arretierung betätigt.

Die Zustelleinrichtung des beanspruchten Effektors ist einachsig oder mehrachsig beweglich. Sie kann ein mit der Halterung verbundenes Zustellelement aufweisen. Dieses wird entsprechend einachsig oder mehrachsig zum Ankuppeln und eventuell auch zum Entkuppeln bewegt. Die Zustelleinrichtung weist erfindungsgemäß für diese Kinematik mindestens eine translatorisch und/oder rotatorische bewegliche Zustelleinheit auf. Mindestens eine Zustelleinheit weist erfindungsgemäß einen steuerbaren Antrieb auf. Diese gesteuert angetriebene Zustelleinheit führt z.B. eine translatorische, insbesondere lineare, Zustellbewegung aus. Das Zustellelement dieser Zustelleinheit kann mit dem Ladestecker, insbesondere mit der Halterung für den Ladestecker, verbunden sein. Eine andere Zustelleinheit kann ebenfalls automatisch oder ggf. auch manuell in eine vorgegebene Position gebracht und dann ggf. fixiert werden. Dies kann z.B. eine Schwenkstellung für einen fahrzeugspezifischen Einbauwinkel, einen sogenannten Nickwinkel, der Ladebuchse sein.

Die Zustelleinrichtung kann eine oder mehrere weitere Funktionen haben. Sie kann z.B. eine Vorrichtung und eine Funktion zum bedarfsweisen Öffnen und Schließen eines fahrzeugseitigen Schutzdeckels der Ladebuchse aufweisen. Hierfür kann z.B. ein Haken an der Zustelleinrichtung ein- und ausgefahren werden.

Der Endeffektor, insbesondere die Zustelleinrichtung, kann andererseits eine Vorrichtung zum bedarfsweisen Entriegeln des angekuppelten Ladesteckers aufweisen, um diesen entkuppeln zu können. Hierbei kann bspw. ein mechanischer Drucktaster (Arretierung über einen Hebel) gedrückt bzw. gelöst werden, um den Ladestecker aus der Buchse entfernen zu können. Hierzu kann eine entsprechende Drucktasterlöseeinheit vorgesehen sein.

Der Endeffektor kann eine Detektionseinrichtung, insbesondere für die Lage des Fahrzeugs und der Ladebuchse, aufweisen. Die Detektionseinrichtung arbeitet vorzugsweise berührungslos und insbesondere optisch. Die Zustellung des Ladesteckers und das Ankuppeln sowie ggf. Entkuppeln können einfacher, besser und kostengünstiger als beim Stand der Technik überwacht werden. Eine aufwändige sensorische Kräfteerfassung an der Positioniervorrichtung ist bei der Detektion nicht erforderlich. Eine sensorische Kräfteerfassung kann vorhanden sein und kann auf den Endeffektor, insbesondere die Zustelleinrichtung reduziert werden.

Die Detektionseinrichtung kann eine oder mehrere Komponenten aufweisen. Eine Komponente kann eine optische Bilderfassungseinrichtung oder ein sogenanntes Visionsystem sein, um optisch und durch Bildauswertung die Ladebuchse und deren aktuelle Position zu erkennen. Eine andere Komponente der Detektionseinrichtung kann ein Abstandssensor sein. Eine weitere Komponente kann eine Beleuchtung sein. Diese kann auf die Blickrichtung der optischen Bilderfassungseinrichtung und des Abstandssensors abgestimmt sein, um das Suchfeld zu beleuchten und die Ladebuchse besser erkennen zu können.

Ein Abstandssensor kann an der Zustelleinrichtung und vorzugsweise in unmittelbarer Nähe des Ladesteckers angeordnet sein. Eine optische Bilderfassungseinrichtung kann sich ebenfalls an dieser Stelle oder in deren Nähe befinden. Sie kann alternativ an anderer Stelle, z.B. an der Ausgleichseinrichtung, insbesondere an deren Anschluss zur Verbindung mit der Positioniervorrichtung oder auch an der Positioniervorrichtung selbst angeordnet sein.

Die Detektionseinrichtung kann für unterschiedliche Steuerzwecke eingesetzt werden. Sie kann mit der Zustelleinrichtung und/oder der Positioniervorrichtung steuertechnisch verbunden sein. Die Detektionseinrichtung kann für die Positioniervorrichtung zum funktionsgerechten Positionieren des Endeffektors am Fahrzeug und an der Ladebuchse benutzt werden. Sie kann andererseits für die Zustelleinrichtung und die Zustellung sowie das Ankuppeln und ggf. auch Entkuppeln des Ladesteckers verwendet werden. Sie kann ferner zur Detektion von Störeinflüssen, insbesondere am Zustell-und Kupplungsbereich, und zur Vermeidung von Unfällen, Beschädigungen oder dgl. eingesetzt werden.

Mit der Detektionseinrichtung kann die Existenz und ggf. die Art eines Fahrzeugs im Arbeitsbereich der elektrischen Ladeeinrichtung erkannt werden. Aus dem erkannten Fahrzeug kann die Ausbildung und ggf. auch die erwartete Lage der Ladebuchse ermittelt werden. Hieraus kann wiederum auf den benötigten Ladestecker geschlossen werden. Diesen kann dann die elektrische Ladeeinrichtung zielgerichtet aus einem evtl. Magazin entnehmen.

Durch den Endeffektor, insbesondere die Halterung des Ladesteckers, kann eine auf den Ladestecker wirkende Oszillation oder Vibration übertragen werden. Hierdurch kann der Ladestecker beim Ankuppeln und ggf. auch beim Entkuppeln gerüttelt werden. Diese bevorzugt quer oder schräg zur Zustellrichtung gerichtete Rüttel- oder Oszilationsbewegung erleichtert die Zustellbewegung beim An- und Entkuppeln. Bevorzugt ist die Ladeeinrichtung dazu ausgebildet, eine auf den Ladestecker beim Ankuppeln und ggf. Entkuppeln wirkende Oszillation oder Vibration zu erzeugen, insbesondere den Ladestecker quer oder schräg zur Zustellrichtung zu rütteln.

Die beanspruchte elektrische Ladeeinrichtung weist eine einachsig oder mehrachsig gesteuert bewegliche Positioniervorrichtung mit einem Endeffektor auf, welcher ein oder mehrere der vorgenannten Merkmale aufweist. Die Bewegungen der Positioniervorrichtung können mittels der Detektionseinrichtung gesteuert werden. Die Positioniervorrichtung kann eine oder mehrere translatorische und/oder rotatorische Bewegungsachsen mit entsprechenden steuerbaren Achsantrieben aufweisen. Sie kann außerdem eine Steuerung aufweisen. Mit dieser Steuerung kann auch die Zustelleinrichtung sowie die Detektionseinrichtung verbunden sein.

Mit dem beanspruchten Verfahren positioniert die Positioniervorrichtung den Endeffektor mit dem aufgenommenen Ladestecker an der Ladebuchse. Erfindungsgemäß weist hierbei der Endeffektor eine Halterung für einen elektrischen Ladestecker und eine eigene automatische Zustelleinrichtung für die Halterung auf, wobei die Zustelleinrichtung den elektrischen Ladestecker automatisch mit einer Ladebuchse am Fahrzeugs kuppelt und ggf. zu entkuppelt und die Zustelleinrichtung mindestens eine translatorisch und/oder rotatorisch bewegliche Zustelleinheit aufweist, wobei mindestens eine Zustelleinheit einen steuerbaren Antrieb aufweist. Erfindungsgemäß weist der Endeffektor eine ein- und ausfahrbare Ausgleichseinrichtung für den Ladestecker, insbesondere die Halterung, auf, die in mindestens einer Achse verstellbar ist und Relativbewegungen zwischen dem Fahrzeug und der Positioniervorrichtung beim Laden ausgleicht. Der Ladestecker kann dabei eine zustellungsgünstige Position einnehmen. Der Endeffektor kann anschließend den Ladestecker zustellen und mit der Ladebuchse kuppeln. Die Positionierung, Zustellung und Kupplung des Ladesteckers kann automatisch durchgeführt werden. Dies kann mittels einer bevorzugt berührungslosen Erfassung der Ladebuchse durch eine mitgeführte Detektionseinrichtung erfolgen. Die Detektionseinrichtung kann von der Positioniervorrichtung und/oder dem Endeffektor mitgeführt werden bzw. dort angeordnet sein. Die Detektionseinrichtung kann auch aufgeteilt werden, wobei sich eine oder mehrere ihrer Komponenten an der Positioniervorrichtung und eine oder mehrere Komponenten am Endeffektor befinden.

Die beanspruchte Ladetechnik ermöglicht das Aufbringen hoher Fügekräfte beim Ankuppeln und/oder Entkuppeln des Ladesteckers. Sie sorgt für eine genaue Positionierung des Ladesteckers und gleicht einen Winkelversatz und/oder Positionsversatz zwischen dem Ladestecker und der Ladebuchse aus. Die beanspruchte Ladetechnik ist auch in der Lage, variierende und unbekannte Parkpositionen des Fahrzeugs aufzunehmen und zu kompensieren. Durch Einsatz eines geeigneten Halters ist es möglich, unterschiedliche Arten und Geometrien von Ladesteckern aufzunehmen. Die Ladetechnik ist dadurch universell und für unterschiedlichste Ladestecker einsetzbar. Eine entsprechend ausgebildete Halterung erlaubt es außerdem, den Ladestecker bedarfsweise zu entnehmen. Hierdurch ist auch ein manuelles Ankuppeln und Laden möglich, z.B. im Fehlerfall.

Weiterhin bevorzugt ist die Antriebs- und/oder Steuertechnik der Ausgleichseinrichtung oder die angetriebene Zustelleinrichtung MRK-fähig (Mensch-Roboter-Kollaborativ/Kooperativ) ausgestaltet. Bevorzugt ist die Antriebs- und/oder Steuertechnik der Ausgleichseinrichtung oder die angetriebene Zustelleinrichtung derart ausgestaltet und/oder ausgelegt, dass auftretende Kräfte und/oder Momente einen Menschen nahezu nicht, bevorzugt nicht verletzen können. Hierbei sind bevorzugt die, insbesondere auftretenden Kräfte, Leistungen und/oder Momente der Antriebs- und/oder Steuertechnik der Ausgleichseinrichtung oder der angetriebenen Zustelleinrichtung bzw. am Endeffektor und/oder an der Zustelleinrichtung auftretenden Kräfte und/oder Momente derart gering ausgelegt, angesetzt und/oder vorgegeben, dass eine menschliche Verletzung nahezu nicht, bevorzugt nicht ermöglicht ist. Hierzu können sicher umschaltbare Antriebe oder eine sensitive Zustelleinrichtung angeordnet bzw. verwendet sein.

Weiterhin bevorzugt wird während der Zustellbewegung der Endeffektor, die Zustelleinrichtung und/oder die auf diese auftretenden Kräfte und/oder Momente überwacht oder detektiert und in dieser Zustellbewegung die Kräfte und/oder Momente gering ausgelegt. Sobald ein Kontakt des Ladesteckers mit der Ladebuchse detektiert oder festgestellt wurde, können die Kräfte und/oder Momente auf bzw. durch den Endeffektor, die Zustelleinrichtung bzw. den Ladestecker erhöht werden, sodass ein vollständiges Einbringen des Ladesteckers mit erhöhten Kräften und/oder Momenten erfolgen und dieser erfolgreiche gesteckt werden kann.

Weiterhin weist der Endeffektor und die Zustelleinrichtung bevorzugt eine MRK-fähige Form bzw. Ausgestaltung auf, in der Art, dass bspw. scharfe Kanten oder Klemmstellen vermieden oder entfernt werden.

Die Erfindung ist in den Zeichnungen beispielhaft und schematisch dargestellt. Im Einzelnen zeigen:
- Figur 1:: einen Endeffektor mit einem Ladestecker zusammen mit einer abgebrochen dargestellten Positioniervorrichtung und einem Fahrzeug mit einer Ladebuchse in einer Seitenansicht;
- Figur 2:: eine andere perspektivische Ansicht des Endeffektors von Figur 1;
- Figur 3:: eine Ausgleichseinrichtung des Endeffektors in einer Seitenansicht;
- Figur 4:: eine perspektivische Anordnung einer Ausgleichseinrichtung mit doppelter Darstellung in einer ausgefahrenen Stellung und in einer eingefahren Endstellung und
- Figur 5:: eine elektrische Ladeeinrichtung mit einer schematisch dargestellten Positioniervorrichtung und einem Endeffektor gemäß Figur 1 bis 4.

Die Erfindung betrifft einen Endeffektor (5), eine damit ausgerüstete elektrische Ladeeinrichtung (1) und ein Verfahren.

Die Ladeeinrichtung (1) dient zum automatischen Zustellen und Ankuppeln eines elektrischen Ladesteckers (2) an eine Ladebuchse (3) eines Fahrzeugs (4). Hierdurch kann der elektrische Energiespeicher des Fahrzeugs (4), z.B. eines Elektromobils, automatisch aufgeladen werden. Die Ladeeinrichtung (1) befindet sich z.B. an einem Parkplatz für das Fahrzeug (4).

Die Ladeeinrichtung (1) weist eine Positioniervorrichtung (6) auf, die einen Endeffektor (5) trägt, der seinerseits den elektrischen Ladestecker (2) hält. Der Ladestecker (2) und die Ladebuchse (3) können in beliebig geeigneter Weise ausgebildet sein und können miteinander gekuppelt und ggf. entkuppelt werden. Der Ladestecker (2) ist mittels eines Elektrokabels beweglich und ist mit einer Stromversorgung verbunden, die z.B. stationär angeordnet ist. Sie kann als flurgebundene Ladesäule, als Ladegerät an einer Wand oder in anderer geeigneter Weise ausgebildet sein.

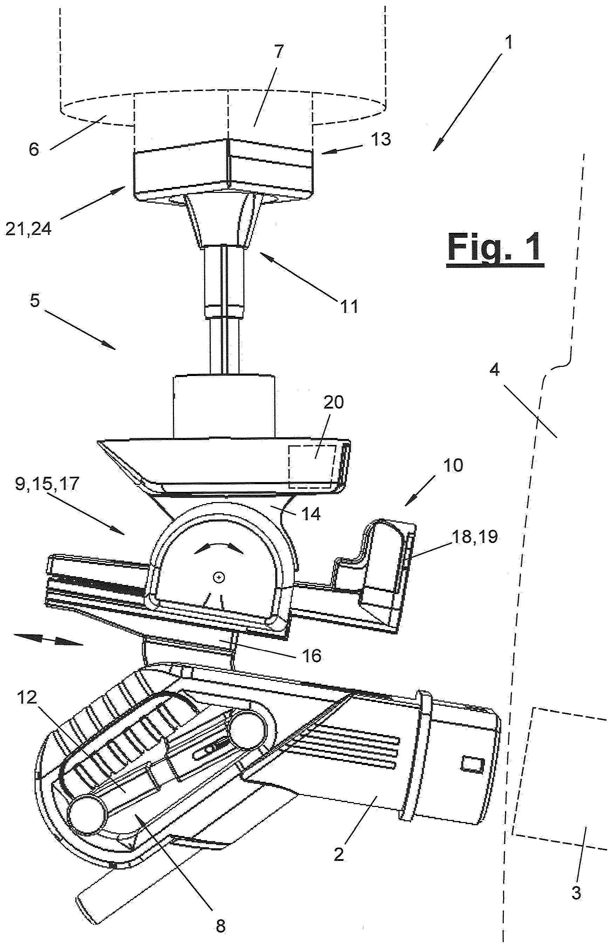

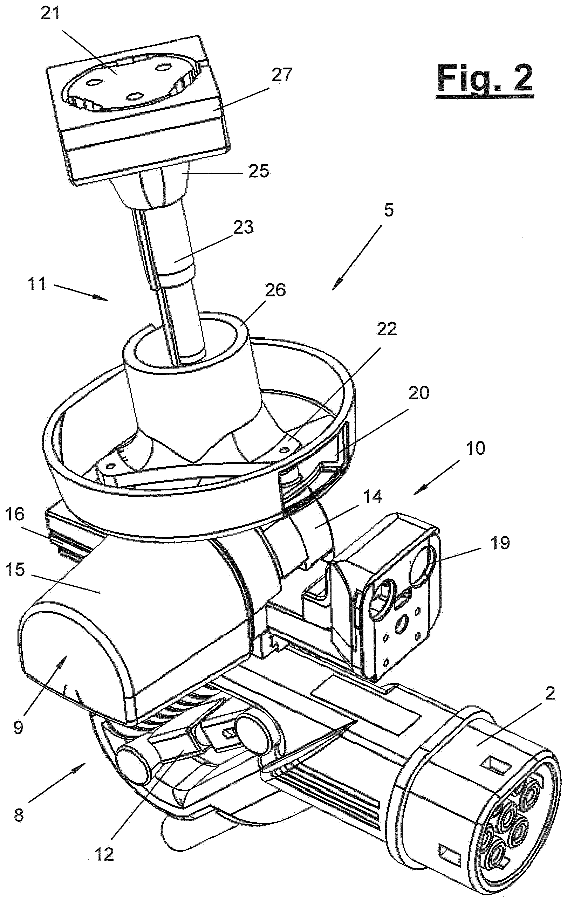

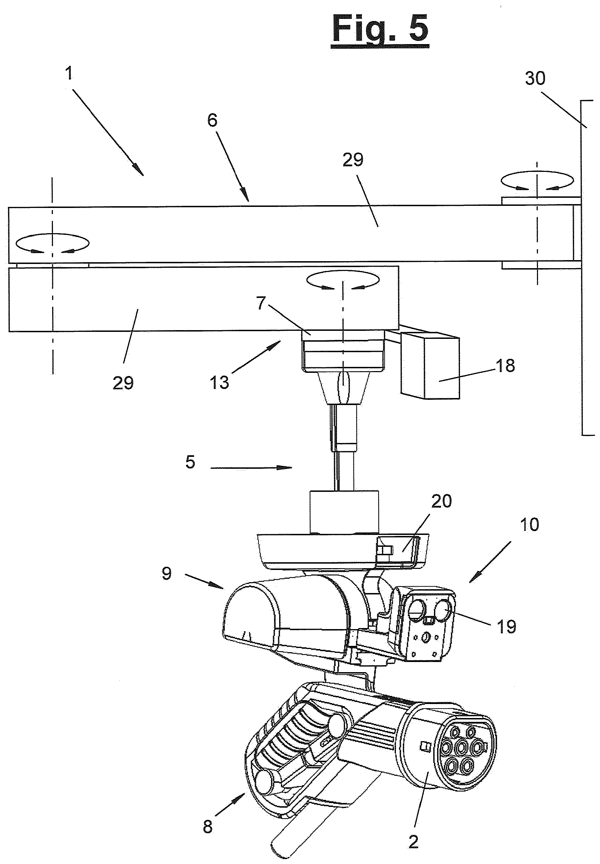

Figur 1 zeigt den Endeffektor (5), wobei die Positioniervorrichtung (6) und das Fahrzeug (4) mit der Ladebuchse (3) schematisch angedeutet sind. In Figur 5 ist die Ladeeinrichtung mit dem Endeffektor (5) und einer beispielhaften Positioniervorrichtung (6) dargestellt. Figur 2 bis 4 zeigen Details des Endeffektors (5).

Der Endeffektor (5) weist eine Halterung (8), eine Zustelleinrichtung (9) und eine Ausgleichseinrichtung (11) auf. Der Endeffektor (5) kann außerdem eine Detektionseinrichtung (10) aufweisen. Der Endeffektor (5) hat ferner einen Anschluss (21) zur Verbindung mit der Positioniervorrichtung (6). Der Anschluss (21) ist z.B. flanschartig ausgebildet und kann mit dem z.B. ebenfalls flanschartigen und um eine Abtriebsachse drehenden Abtriebselement (7) der Positioniervorrichtung (6) in geeigneter Weise verbunden werden, z.B. durch Schrauben.

Die Halterung (8) dient zur dauerhaften oder wechselhaften Aufnahme des elektrischen Ladesteckers (2). Der Ladestecker (2) kann in beliebig geeigneter Weise ausgebildet sein. Er kann z.B. den in Figur 1 gezeigten Handgriff für eine wahlweise Handbedienung aufweisen. Die Halterung (8) weist einen Steckerhalter (12) auf, der den Ladestecker (2) in geeigneter Weise und mit einer definierten Lage und Ausrichtung aufnimmt. Der Steckerhalter (12) kann z.B. in der Öffnung am Handgriff des Ladesteckers (2) angreifen. Der Steckerhalter (12) kann passiv oder mittels eines gesteuerten Antriebs aktiv verstellbar sein und kann an unterschiedliche Ladestecker (2) angepasst werden. Der Steckerhalter (12) kann einen Ladestecker (2) dauerhaft oder temporär aufnehmen, insbesondere greifen.

Die Halterung (8), insbesondere der Steckerhalter (12), kann in einer nicht dargestellten Variante verschiedene, bereitgehaltene Ladestecker (2) aus einem Magazin wahlweise greifen. Die Auswahl kann mittels einer nachfolgend erläuterten Detektionseinrichtung (10) erfolgen, welche die fahrzeugseitige Ladebuchse (3) erkennt und die Steckerauswahl trifft.

Die Ladeeinrichtung (1) kann eine Oszillation oder Vibration erzeugen. Diese wirkt auf den gehaltenen Ladestecker (2) ein und bewirkt Rüttelbewegungen des Ladesteckers (2), die quer oder schräg zur Zustellrichtung bzw. zur Steckrichtung beim Ankuppeln und Entkuppeln gerichtet sind. Die Oszillation kann z.B. durch eine Bewegung der Positioniervorrichtung (6) erzeugt werden.

Die Halterung (8) ist an der Zustelleinrichtung (9) angeordnet. Die Zustelleinrichtung (9) stellt die Halterung (8) und den Ladestecker (2) in einer bevorzugt translatorisch, insbesondere linearen, Zustellbewegung an die Ladebuchse (3) zum Ankuppeln zu. Sie kann den Ladestecker (2) zum Entkuppeln auch wieder in gleicher Richtung abziehen. Dabei kann ggf. eine Verriegelung am Ladestecker (2) mit einer geeigneten Löseeinrichtung (nicht dargestellt) gelöst werden.

Die Zustelleinrichtung (9) weist mindestens eine Zustelleinheit (15,17) auf. Im gezeigten Ausführungsbeispiel beinhaltet sie zwei Zustelleinheiten (15,17). Diese sind an einem Gestell (14) angeordnet.

Die eine Zustelleinrichtung (15) weist ein bewegliches Zustellelement (16) auf, an dem die Halterung (8) in einer definierten Lage und Ausrichtung angeordnet ist. Die eine Zustelleinheit (15) ist z.B. als translatorische Zustelleinheit ausgebildet und bewirkt die in Figur 1 mit geraden Pfeilen dargestellte Zustellbewegung in Steckrichtung des Ladesteckers (2) und der Ladebuchse (3), die dazu z.B. fluchtend ausgerichtet sind.

Das Zustellelement (16) gehört zu dieser Zustelleinheit (15) und ist z.B. als Schlitten ausgebildet. Die Zustelleinheit (15) weist einen steuerbaren Antrieb auf.

Dieser kann z.B. einen Elektromotor mit einem Zahnstangenantrieb in Verbindung mit der Schlittenführung für das Zustellelement (16) aufweisen.

Die zweite Zustelleinheit (17) kann z.B. eine rotatorische Zustelleinheit sein, die in Figur 1 durch gebogene Pfeile symbolisiert ist. Sie ist am Gestell (14) angeordnet. Die rotatorische Zustelleinheit (17) ist z.B. der translatorischen Zustelleinheit (15) vorgeschaltet und trägt diese. Die Zustellachse der rotatorischen Zustelleinheit (17) kann quer zur linearen Zustellbewegung der translatorischen Zustelleinheit (15) ausgerichtet sein.

Mit der rotatorischen Zustelleinheit (17) können die translatorische bzw. lineare Zustellbewegung und der Ladestecker (2) auf eine gegebene Schräglage, den sog. Nickwinkel, der Ladebuchse (3) am Fahrzeug (4) fluchtend eingestellt werden. Der Ladestecker (2) ist mit einer vorgegebenen Ausrichtung am Zustellelement (16) angeordnet. Seine Stromkontakte und ggf. seine Steckerfassung sind dabei parallel zur Zustellrichtung bzw. Zustellbewegung ausgerichtet.

Die rotatorische Zustelleinheit (17) kann z.B. als Schwenklagerung zwischen dem Gestell (14) und der anderen Zustelleinheit (15) ausgebildet sein. Die Einstellung der Schwenklage bzw. Schräglage der anderen Zustelleinheit (15) und ihres Zustellelements (16) kann manuell erfolgen und wird in geeigneter Weise fixiert, z.B. durch eine Klemmschraube. Alternativ kann auch die rotatorische Zustelleinheit (17) einen steuerbaren Antrieb aufweisen.

Das Gestell (14) kann frontseitig einen Ansatz aufweisen, an dem die Detektionseinrichtung (10) oder zumindest eine ihrer Komponenten angeordnet ist. Der Ansatz und die Frontseite sind zum vorderen Ende des Ladesteckers (2) und zum Fahrzeug (4) bzw. zur Ladebuchse (3) ausgerichtet. Der frontseitige Ansatz und/oder die Detektionseinrichtung (10) kann alternativ am Zustellelement (16) angeordnet sein und bei der Zustellbewegung mitgeführt werden.

Der Endeffektor (5) ist gemäß Figur 1 und 5 zumindest in der Betriebsstellung zum Ankuppeln bzw. Entkuppeln von Ladestecker (2) und Ladebuchse (3) vertikal ausgerichtet und wird in dieser Lage von der Positioniervorrichtung (6) gehalten. Der Endeffektor (5) kann auch eine leichte Schrägausrichtung haben. Die Ausrichtung ist derart gewählt, dass sie zumindest eine deutlich überwiegende vertikale Richtungskomponente hat. Der Endeffektor (5) in der Betriebsstellung vorzugsweise hängend an der Positioniervorrichtung (6) angeordnet und gehalten.

Die Ausgleichseinrichtung (11) ist der Zustelleinrichtung (9) zugeordnet, vorzugsweise vorgeschaltet. Sie ist in der in Figur 1 gezeigten Betriebsstellung oberhalb und auf der Zustelleinrichtung (9) angeordnet. Sie ist z.B. auf deren Gestell (14) montiert. Die Ausgleichseinrichtung (11) trägt am einen, oberen Ende den Anschluss (21) für die Positioniervorrichtung (6). Sie weist am anderen, gegenüberliegenden Ende einen weiteren Anschluss (22) für die Aufnahme und Befestigung der Zustelleinrichtung (9) auf.

Die Ausgleichseinrichtung (11) kann ein- und ausgefahren werden. Sie ist für den Ladestecker (2), insbesondere den Halter (8), vorgesehen und ist in mindestens einer Achse verstellbar. Durch diese nachgiebige und z.B. passive Verstellbarkeit können Relativbewegungen zwischen dem Fahrzeug (4) und der Positioniervorrichtung (6) beim Laden und in Ankuppelstellung von Ladestecker (2) und Ladebuchse (3) ausgeglichen werden.

In der gezeigten Ausführungsform hat die Ausgleichseinrichtung (11) nur eine Bewegungsachse, die z.B. als translatorische Bewegungsachse ausgebildet ist. Die Bewegungsachse ist in der besagten Betriebsstellung vertikal ausgerichtet oder hat zumindest eine überwiegende vertikale Richtungskomponente. Sie erstreckt sich z.B. entlang der vorgenannten Ausrichtung des Endeffektors (5).

Die Ausgleichseinrichtung (11) weist ein längenverstellbares Ausgleichselement (23) auf, welches z.B. als Teleskopstange ausgebildet ist. Das Ausgleichselement (23) kann eine Geradführung aufweisen, die in ihrer Bewegungsrichtung wirkt und Verdrehungen der Teleskopteile vermeidet. Das Ausgleichselement (23) ist am einen, oberen Ende mit dem Anschluss (21) fest oder drehbar verbunden und ist am anderen, unteren Ende mit dem anderen Anschluss (22) verbunden. An den Anschlüssen (21,22) können ein Sockel (25) und eine Hülse (26) angeordnet sein, die beim Einfahren in axialer Richtung miteinander in Eingriff gebracht werden können. Sie versteifen dabei die Ausgleichseinrichtung (11) in der eingefahrenen Stellung und können bei der Zustellung des Ladesteckers (2) auftretende Kräfte und ggf. Momente aufnehmen.

Die Ausgleichseinrichtung (11) ist federgelagert, um die, insbesondere passive, nachgiebige Verstellbarkeit in axialer Richtung bzw. entlang der Bewegungsachse durch das längenverstellbare Ausgleichselement (23) zu ermöglichen. Hierzu weist die Ausgleichseinrichtung (11) bzw. das längenverstellbare Ausgleichselement (23) eine Federvorrichtung (13) auf, wodurch eine Kraft und/oder eine Bewegung in dieser Richtung ausgeglichen werden können. Dies bedeutet, dass Kräfte und/oder Bewegungen des Fahrzeugs beim Laden oder Ankuppel- und Entkuppelvorgang entlang einer im wesentlichen vertikalen Richtung, die auf den Endeffektor (5) wirken würden und zu Beschädigungen führen könnten, durch die Federvorrichtung (13) in Verbindung mit der Ausgleichseinrichtung (11) bzw. dem Ausgleichselement (23) aufgenommen oder ausgeglichen werden. Die Federvorrichtung (13) kann hierbei ein Federelement (31) aufweisen, das entgegen einer Schwerkraft, die auf den Endeffektor (5) wirkt und diesen in vertikaler Richtung nach unten zieht, den Endeffektor (5) in einer Mittelstellung hält, sodass ein Federweg in beide Richtungen ermöglicht wird. Auch kann die Federvorrichtung (13) aus zwei Federelementen (31) bestehen, die den Endeffektor bzw. die Federvorrichtung (13) vorgespannt in einer Mittelstellung halten.

Die Ausgleichseinrichtung (11) weist eine Arretierung (24) für zumindest eine vorgegebene Stellung auf, die sie auf ihrem Bewegungsweg beim Ein- und Ausfahren einnehmen kann. Vorzugsweise ist dies die eingefahrene Stellung. Diese kann durch eine geeignete Sensorik, insbesondere Endlagenschalter, detektiert werden.

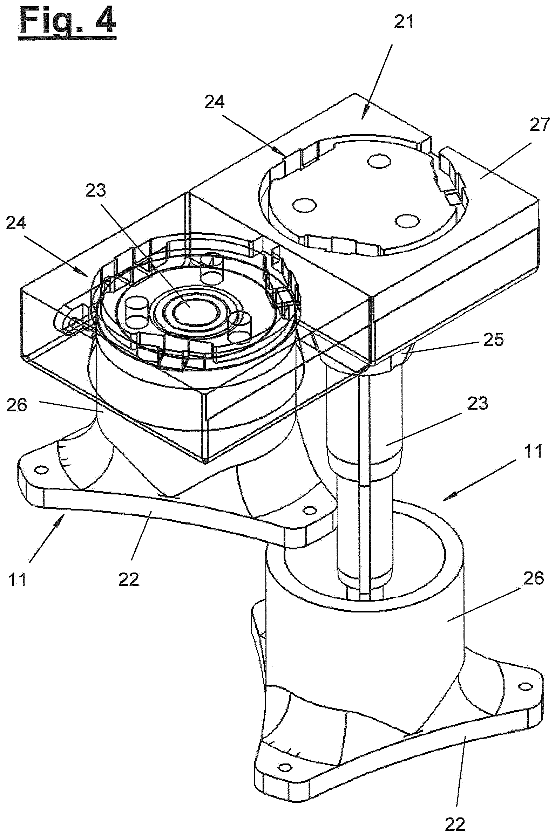

Figur 4 zeigt in einer Doppeldarstellung die eingefahrene und arretierte Endstellung in der linken Darstellung und eine ausgefahrene Stellung in der rechten Darstellung.

Das Ausgleichselement (23) ist somit in seinen beiden (End-)Anschlägen gezeigt, wobei die (End-)Anschläge hier keine eigenen Elemente bilden, sondern sich durch die Ausgestaltung des Ausgleichselements (23) ergeben.Die Arretierung (24) kann in beliebig geeigneter Weise ausgebildet sein. Sie kann automatisch steuerbar sein. Dies kann auf unterschiedliche Weise realisiert werden. Die Arretierung (24) kann z.B. ein gesteuert angetriebenes, z.B. stift- oder hakenartiges Riegelelement aufweisen, welches das längenverstellbare Ausgleichselement (23) verriegelt und entriegelt.

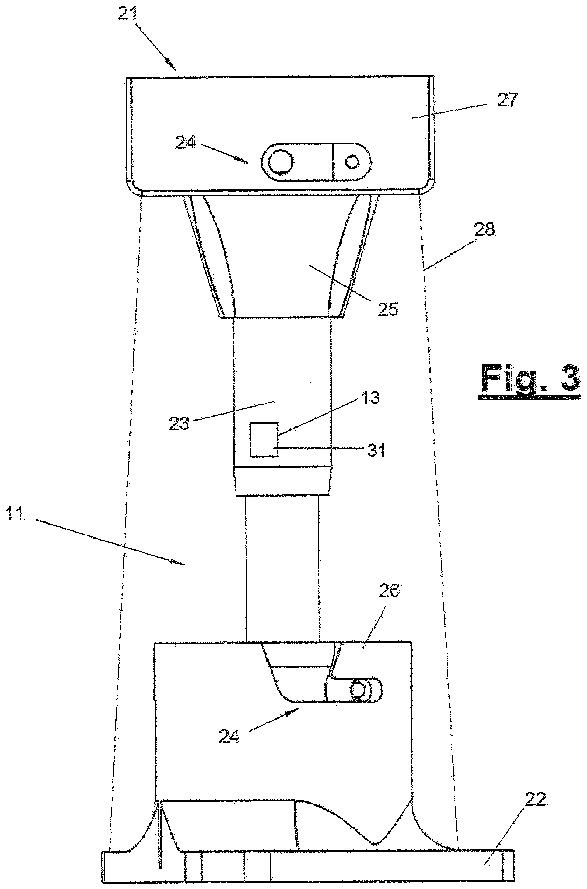

In einer anderen und in Figur 3 und 4 gezeigten Variante kann die Arretierung (24) einen Riegelbolzen am Anschluss (21) und eine abgebogene Riegelnut an der Hülse (26) aufweisen, die miteinander einen Bajonettverschluss bilden können. Die Zuordnung kann auch umgekehrt sein. Beim Einfahren und Verkürzen der Ausgleichseinrichtung (11) taucht der Riegelbolzen in die nach oben offene Riegelnut ein und kann anschließend durch eine Bewegung der Positioniervorrichtung (6) gedreht werden. Er tritt dabei in den querliegenden und in Umfangsrichtung gerichteten Nutenabschnitt ein und hält die Hülse (26) fest. Die Riegelnut kann durch den angekuppelten Ladestecker (2) drehfest abgestützt werden.

Der Anschluss (21) kann einen Kragen (27) aufweisen, der mit dem Abtriebselement (7) der Positioniervorrichtung (6) verbunden werden kann. Der Kragen (27) umgreift das das obere verdickte Ende des Ausgleichselements (23), insbesondere der Teleskopstange, und nimmt dieses drehbar auf. Der Riegelbolzen kann am Kragen (27) angeordnet sein. Die Drehstellung und die geschlossene Arretierung (24) mit dem Bajonettverschluss kann in geeigneter Weise gesichert werden, z.B. durch einen Federbolzen.

Die Ausgleichseinrichtung (11) ist in der besagten Betriebsstellung hängend an der Positioniervorrichtung (6) angeordnet und kann nach Lösen der Arretierung (24) in den besagten ein oder mehreren Verstellachsen ausfahren. Dies kann z.B. durch ihr Eigengewicht und das Gewicht der Zustelleinrichtung (9) sowie der Halterung (8) bewirkt werden. Die Ausgleichseinrichtung (11) kann gemäß Figur 3 auch eine Verkleidung (28) zwischen den Anschlüssen (21,22) zum Beschädigungs- und Unfallschutz aufweisen.

Die Detektionseinrichtung (10) kann am Endeffektor (5) und/oder an der Positioniervorrichtung (6) angeordnet sein. Sie kann eine oder mehrere Erfassungsfunktionen haben. Sie erfasst zumindest das Fahrzeug (4) und dessen Ladebuchse (3). Sie kann auch eventuelle Störeinflüsse beim Ankuppeln und Entkuppeln des Ladesteckers (2) und ggf. auch sonstige Umgebungsbedingungen oder Einflüsse erfassen.

Die Detektionseinrichtung (10) weist in der gezeigten Ausführungsform eine Bilderfassungseinrichtung (18) auf. Diese kann z.B. am besagten Ansatz der Zustelleinrichtung (9) bzw. des Gestells (14) angeordnet sein. Sie kann alternativ oder zusätzlich auch an anderer Stelle angeordnet sein, z.B. an der Positioniervorrichtung (6), insbesondere an deren Abtriebselement (7) oder am Anschluss (21), insbesondere am Kragen (27).

Die Detektionseinrichtung (10) kann alternativ oder zusätzlich einen Abstandssensor (19) aufweisen, der frontseitig am besagten Ansatz des Gestells (14) angeordnet ist. Die Bilderfassungseinrichtung (18) und der Abstandssensor (19) können eine zum vorderen Ende des Ladesteckers (2) weisende Blickrichtung haben.

Die Detektionseinrichtung (10) kann zusätzlich eine Beleuchtung (20) aufweisen. Diese kann zur Aufhellung der Umgebung am vorderen Ende des Ladesteckers (2) und des Kupplungsbereichs dienen. Die Beleuchtung (20) kann z.B. in einer topfartigen Aufnahme angeordnet sein und durch ein Fenster im Topfmantel nach außen strahlen.

Die topfartige Aufnahme kann an der Oberseite des Gestells (14) angeordnet sein. Am Boden der topfartigen Aufnahme kann der Anschluss (22) der Ausgleichseinrichtung (11) angeordnet sein.

Die Positioniervorrichtung (6) kann eine oder mehrere translatorische und/oder rotatorische Bewegungsachsen mit beliebig geeigneter Ausrichtung aufweisen. An den Bewegungsachsen können jeweils gesteuerte Achsantriebe angeordnet sein.

Figur 5 zeigt beispielhaft eine Positioniervorrichtung (6). Diese weist zwei oder mehr, z.B. liegend angeordnete, Roboterarme (29) auf, die gelenkig miteinander verbunden sind. Der eine obere Roboterarm ist gelenkig mit einer Basis (30) verbunden, die z.B. an einer aufrechten Wand angeordnet ist. Der zweite, untere Roboterarm weist das besagte drehbar angetriebene Abtriebselement (7) auf. Die gezeigte Positioniervorrichtung (6) weist durch die Gelenke drei rotatorische Achsen mit jeweils einem steuerbaren Achsantrieb und z.B. vertikaler Achsausrichtung auf. Zusätzlich kann für eine Höhenverstellung des Endeffektors (5) zumindest eine weitere und bevorzugt steuerbar angetriebene Bewegungsachse angeordnet sein. Dies kann z.B. eine Linearachse an der Verbindungsstelle zur Basis (30) sein.

Bei einer anderen Ausführung der Positioniereinrichtung (6) kann die Zahl und Anordnung der Roboterarme (29) variieren. Beispielsweise sind linear bewegliche Roboterarme (29) in der Art einer mehrstufigen Schlittenführung möglich. Es sind auch Kombinationen von rotatorischen und translatorischen Roboterarmen (29) und deren Bewegungsachsen möglich.

Die elektrische Ladeeinrichtung (1) kann eine Steuerung aufweisen, die in den Zeichnungen der Übersicht halber nicht dargestellt ist. Die Steuerung kann programmierbar sein und kann eine entsprechende Recheneinheit mit Daten- und Programmspeichern sowie Schnittstellen für Input und Output aufweisen. Die Steuerung kann mit den Antrieben der Positioniervorrichtung (6) und der Zustelleinrichtung (9) sowie der Halterung (8) verbunden sein. Sie kann auch mit der Detektionseinrichtung (10) und der Arretierung (24) sowie mit eventuellen weiteren steuerbaren Komponenten, Sensoren etc. der elektrischen Ladeeinrichtung (1) verbunden sein.

Die elektrische Ladeeinrichtung (1) kann ferner eine bevorzugt drahtlose und ebenfalls nicht dargestellte Kommunikationseinrichtung aufweisen, die einen Empfänger und ggf. einen Sender aufweist. Die Kommunikationseinrichtung kann z.B. auf Funkbasis arbeiten und mit einem Fahrzeug (4), einem Mobilfunkgerät bzw. Smartphone, einer übergeordneten Steuerung zur Energieverwaltung etc. unidirektional oder bidirektional kommunizieren.

Die elektrische Ladeeinrichtung (1) kann außerdem eine z.B. optische und/oder akustische Anzeige für die Meldung von Betriebszuständen, Störungen, Bedienanweisungen etc. aufweisen. Die Kommunikationseinrichtung und die Anzeige können mit der Steuerung verbunden sein.

Nachfolgend wird das Verfahren bzw. die Funktion der elektrischen Ladeeinrichtung (1) beschrieben.

Ein Fahrzeug (4) wird von einem Fahrzeugführer oder bei einem autonomen Fahrzeug durch die Steuerung des Fahrzeugs selbst im Arbeitsbereich der elektrischen Ladeeinrichtung (1), insbesondere der Positioniervorrichtung (6), an einem vorgegebenen und ggf. markierten Parkplatz abgestellt. Die Existenz des Fahrzeugs (4), seine Lage und Ausrichtung und die Lage sowie ggf. Ausrichtung der Ladebuchse (3) werden mit der Detektionseinrichtung (10), insbesondere der Bilderfassungseinrichtung (18) erfasst. Dabei können ggf. auch die Art des Fahrzeugs (4) und/oder die Art der Ladebuchse (3) erkannt oder ermittelt werden.

Die Positionsvorrichtung (4) positioniert dann auf einen Befehl des Fahrzeugführers oder nach Aufforderung durch das Fahrzeug bzw. dessen Steuerung selbst oder auf eigene Veranlassung den aufrechten Endeffektor (5) mit dem aufgenommenen Ladestecker (2) kupplungsgerecht an der Ladebuchse (3). Hierbei können beliebige Bewegungen im Raum ausgeführt werden. Die Positionierung kann anhand der Erfassungsergebnisse der Detektionseinrichtung (10) erfolgen. Die Zustelleinrichtung (9) und die Zustellbewegung können mit einer Voreinstellung bereits auf die Ausrichtung, insbesondere eine eventuelle Schräglage, der Ladebuchse (3) ausgerichtet sein. Sie können alternativ von der Zustelleinrichtung (9) mittels der rotatorischen Zustelleinheit (17) unter Mitwirkung der Detektionseinrichtung (10) passend ausgerichtet werden.

Bei der Positionierung wird auch der nötige Abstand zwischen dem bereitgehaltenen Ladestecker (2) und der Ladebuchse (3) eingestellt. Ein eventueller Deckel oder Verschluss der Ladebuchse (3) kann zuvor geöffnet werden. Bei der Positionierung können auch eventuelle Störkonturen, z.B. ein offener Tankdeckel, erfasst und umgangen werden. Der Endeffektor (5), insbesondere dessen Zustelleinrichtung (9), kann dann den Ladestecker (2) in der bevorzugt translatorischen und insbesondere linearen Zustellbewegung an die Ladebuchse (3) annähern und mit der nötigen Fügekraft andrücken und ankuppeln. Eine sensorische Erfassung der dabei auftretenden Kräfte ist nicht erforderlich, kann aber vorhanden sein.

Bei der Positionierbewegung und der Zustellbewegung ist die Ausgleichseinrichtung (11) eingefahren und arretiert. Nach erfolgtem Ankuppeln kann die Arretierung (24) manuell oder automatisch gelöst werden. Die Positioniervorrichtung (6) kann sich dabei auch bedarfsweise ein Stück nach oben bewegen. Die entriegelte Ausgleichseinrichtung (11) kann dann dieser Bewegung und eventuellen Fahrzeugbewegungen folgen und eine entsprechende Ausfahrbewegung ausführen.

Zum Entkuppeln kann die Positioniereinrichtung (6) die Ausgleichseinrichtung (11) wieder bis in die arretierbare Endstellung einfahren. Die Endstellung kann in geeigneter Weise, z.B. durch eine Sensorik am längenverstellbaren Ausgleichselement (23) oder an anderer Stelle, z.B. an Sockel (25) und/oder Hülse (26), detektiert werden. Die Arretierung (24) kann dann wieder manuell oder automatisch aktiviert werden.

Die Zustelleinrichtung (9) kann anschließend den Ladestecker (2) in Zustellrichtung zurückbewegen und von der Ladebuchse (3) entkuppeln. Die Rückzugbewegung kann als umgekehrte Zustellbewegung verstanden werden. Zuvor kann eventuell mit einer Löseeinrichtung eine Verriegelung am Ladestecker (2) gelöst werden. Anschließend kann der Endeffektor (5) ggf. den Deckel oder Verschluss der Ladebuchse (3) wieder schließen. Ferner kann die Positioniereinrichtung (6) dann den Endeffektor (5) mit dem Ladestecker (2) in eine Ruhestellung oder Bereitschaftsstellung zurückbewegen.

Bei dem Ankuppel- und Entkuppelvorgang sowie bei der Positionierung des Endeffektors (5) kann die Detektionseinrichtung (10) das Umfeld beobachten und insbesondere menschliche oder sonstige Störeinflüsse erfassen. Im Falle eines Auftretens kann eine geeignete Schutzmaßnahme, z.B. ein Stillsetzen oder Rückfahren der elektrischen Ladeeinrichtung (1) oder einer ihrer Komponenten, eingeleitet werden.

Abwandlungen der gezeigten und beschriebenen Ausführungsformen sind in verschiedener Weise möglich. Insbesondere können die Merkmale der Ausführungsbeispiele und der genannten Varianten beliebig miteinander kombiniert und ggf. auch ausgetauscht werden.

Das längenverstellbare Ausgleichselement (23) der gezeigten Ausgleichseinrichtung (11) kann in anderer Weise ausgebildet sein, z.B. als Scherenbeschlag oder als Klappscharnier, die jeweils eine Schwenkbewegung ihrer Glieder zum zumindest weitgehend linearen Ein- und Ausfahren der Ausgleichseinrichtung (11) ausführen. Daneben sind andere beliebig geeignete konstruktive und kinematische Ausbildungen der Ausgleichseinrichtungen (11) und ihrer ein oder mehreren Verstellachsen möglich.

In einer anderen und nicht dargestellten Ausführungsform kann die Ausgleichseinrichtung (11) elastische Ausgleichselemente aufweisen, die kleine Winkel- und Positionsabweichungen (z.B. durch ungenaue Positionierung) ausgleichen können. Diese können entweder in die Ausgleichseinrichtung (11) oder in die Halterung (8) integriert werden. Sie können das gezeigte Ausgleichselement (23) ersetzen oder ergänzen.

In einer weiteren Variante kann die Ausgleichseinrichtung (11) einen steuerbaren, z.B. elektromotorischen Antrieb mit einem ein- und ausfahrbaren Abtriebselement aufweisen. Dieses kann z.B. Linearbewegungen, insbesondere in der Vertikalen, ausführen. Es kann die Funktion des längenverstellbaren Ausgleichselements (23) übernehmen und kann z.B. als Gewindespindel, Zahnstange oder dgl. ausgebildet sein. Der Antrieb und das bevorzugt lineare Abtriebselement können eine steuerbare Linearachse bilden. Zur Freischaltung einer passiven Ausgleichsbewegung kann der Antrieb z.B. nachgiebig geschaltet oder vom Abtriebselement bzw. Ausgleichselements (23) steuerbar an und abgekoppelt werden. Eine solche, teilweise aktive Variante der Ausgleichseinrichtung (11) kann auch für Positionierbewegungen, z.B. in der Vertikalen bzw. z-Achse, eingesetzt werden. Sie kann die Positioniervorrichtung (6) bedarfsweise kinematisch und funktional ergänzen. Sie kann auch bedarfsweise in einer Bewegungsstellung, z.B. der eingefahrenen Endstellung, arretiert werden.

Die Zustellbewegung für den Ladestecker (2) kann eine beliebig geeignete Ausbildung und Richtung haben. Die gezeigte und bevorzugte lineare Zustellbewegung ist für die gezeigte Stecker- und Buchsenausbildung von Vorteil. Bei anderer Gestaltung von Ladestecker (2) und Ladebuchse (3) kann sie sich entsprechend ändern. Die Zustellbewegung kann auch rotatorisch sein oder kombinierte translatorische und rotatorische Bewegungsanteile haben.

### BEZUGSZEICHENLISTE

- 1: Ladeeinrichtung
- 2: Ladestecker
- 3: Ladebuchse
- 4: Fahrzeug, Elektromobil
- 5: Endeffektor
- 6: Positioniervorrichtung
- 7: Abtriebselement
- 8: Halterung
- 9: Zustelleinrichtung
- 10: Detektionseinrichtung
- 11: Ausgleichseinrichtung
- 12: Steckerhalter
- 13: Federvorrichtung
- 14: Gestell
- 15: Zustelleinheit linear
- 16: Zustellelement, Schlitten
- 17: Zustelleinheit rotatorisch
- 18: Bilderfassungseinrichtung
- 19: Abstandssensor
- 20: Beleuchtung
- 21: Anschluss für Positioniervorrichtung
- 22: Anschluss für Zustelleinrichtung
- 23: Ausgleichselement längenverstellbar, Teleskopstange
- 24: Arretierung
- 25: Sockel
- 26: Hülse
- 27: Kragen
- 28: Verkleidung
- 29: Roboterarm
- 30: Basis
- 31: Federelement/-e

## Patentansprüche

1. Endeffektor für eine elektrische Ladeeinrichtung (1), zum Laden eines elektrischen Energiespeichers eines Fahrzeugs (4), wobei der Endeffektor (5) eine Halterung (8) für einen elektrischen Ladestecker (2) aufweist, und der Endeffektor (5) eine eigene automatische Zustelleinrichtung (9) für die Halterung (8) sowie einen flanschartigen Anschluss (21) zur Verbindung mit einer Positioniervorrichtung (6) der Ladeeinrichtung (1) aufweist, wobei die Zustelleinrichtung (9) dazu ausgebildet ist, den elektrischen Ladestecker (2) automatisch mit einer Ladebuchse (3) am Fahrzeugs (4) zu kuppeln und ggf. zu entkuppeln und die Zustelleinrichtung (9) mindestens eine translatorisch und/oder rotatorisch bewegliche Zustelleinheit (15,17) aufweist, wobei die mindestens eine Zustelleinheit (15,17) einen steuerbaren Antrieb aufweist, **dadurch gekennzeichnet, dass** der Endeffektor (5) eine ein- und ausfahrbare Ausgleichseinrichtung (11) für den Ladestecker (2), insbesondere die Halterung (8), aufweist, die in mindestens einer Achse verstellbar und zum Ausgleich von Relativbewegungen zwischen dem Fahrzeug (4) und der Positioniervorrichtung (6) beim Laden eingerichtet ist.

2. Endeffektor nach Anspruch 1, **dadurch gekennzeichnet, dass** die Ausgleichseinrichtung (11) der Zustelleinrichtung (9) vorgeschaltet ist und den Anschluss (21) zur Verbindung mit der Positioniervorrichtung (6) aufweist.

3. Endeffektor nach Anspruch 1 oder 2, **dadurch gekennzeichnet, dass** die Ausgleichseinrichtung (11) ein längenverstellbares Ausgleichselement (23), insbesondere eine Teleskopstange, aufweist.

4. Endeffektor nach einem der Ansprüche 1 bis 3, **dadurch gekennzeichnet, dass** die Ausgleichseinrichtung (11) eine bevorzugt automatisch steuerbare Arretierung (24) für zumindest eine vorgegebene Stellung aufweist, insbesondere für ihre eingefahrene Stellung.

5. Endeffektor nach einem der vorhergehenden Ansprüche, **dadurch gekennzeichnet, dass** die Zustelleinrichtung (9) einachsig oder mehrachsig beweglich ist und ein mit der Halterung (8) verbundenes Zustellelement (16) aufweist.

6. Endeffektor nach einem der vorhergehenden Ansprüche, **dadurch gekennzeichnet, dass** der Endeffektor (5) eine Detektionseinrichtung (10) für die Ladebuchse (3) aufweist.

7. Endeffektor nach Anspruch 6, **dadurch gekennzeichnet, dass** die Detektionseinrichtung (10) eine optische Bilderfassungseinrichtung (18) und ggf. einen Abstandssensor (19) sowie ggf. eine Beleuchtung (20) aufweist.

8. Endeffektor nach einem der vorhergehenden Ansprüche, **dadurch gekennzeichnet, dass** die Halterung (8) einen Steckerhalter (12) aufweist, der an unterschiedliche Ladestecker (2) adaptierbar ist oder der an einen spezifischen Ladestecker (2) angepasst und wechselbar angeordnet ist.

9. Endeffektor nach Anspruch 3, **dadurch gekennzeichnet, dass** das längenverstellbare Ausgleichselement (23) passiv ausgebildet ist.

10. Endeffektor nach Anspruch 9, **dadurch gekennzeichnet, dass** das längenverstellbare Ausgleichselement (23) eine Federvorrichtung (13) aufweist, wodurch der Endeffektor (5) in einer Ausgangsposition haltbar bzw. lagerbar ist.

11. Endeffektor nach Anspruch 9, **dadurch gekennzeichnet, dass** die Ausgangsposition zwischen einer ausgefahrenen Stellung und einer eingefahrenen Endstellung liegt, bevorzugt im Wesentlichen in einer Mittelstellung.

12. Endeffektor nach Anspruch 11, **dadurch gekennzeichnet, dass** die Ausgleichseinrichtung (11) oder das Ausgleichselement (23) wenigstens zwei, bevorzugt genau zwei Endanschläge, welche die ausgefahrene Stellung und die eingefahrenen Endstellung definieren, aufweist.

13. Elektrische Ladeeinrichtung, zum Laden eines elektrischen Energiespeichers eines Fahrzeugs (4), **dadurch gekennzeichnet, dass** die Ladeeinrichtung (1) eine einachsig oder mehrachsig gesteuert bewegliche Positioniervorrichtung (6) mit einem Endeffektor (5) nach mindestens einem der Ansprüche 1 bis 12 aufweist.

14. Elektrische Ladeeinrichtung nach Anspruch 13, **dadurch gekennzeichnet, dass** die Ladeeinrichtung (1) dazu ausgebildet ist, eine auf den Ladestecker (2) beim Ankuppeln und ggf. Entkuppeln wirkende Oszillation oder Vibration zu erzeugen, insbesondere den Ladestecker (2) quer oder schräg zur Zustellrichtung zu rütteln.

15. Verfahren zum automatischen Kuppeln eines elektrischen Ladesteckers (2) mit einer Ladebuchse (3) an einem Fahrzeug (4) mittels einer elektrischen Ladeeinrichtung (1) und die Ladeeinrichtung (1) eine einachsig oder mehrachsig gesteuert bewegliche Positioniervorrichtung (6) mit einem den Ladestecker (2) haltenden Endeffektor (5) aufweist, wobei die Positioniervorrichtung (6) den Endeffektor (5) mit dem Ladestecker (2) an der Ladebuchse (3) positioniert und der Endeffektor (5) anschließend den Ladestecker (2) zustellt und mit der Ladebuchse (3) kuppelt, wobei die Positionierung, Zustellung und Kuppelung automatisch durchgeführt werden, insbesondere mittels einer bevorzugt berührungslosen Erfassung der Ladebuchse (3) durch eine mitgeführte Detektionseinrichtung (10), wobei der Endeffektor (5) eine Halterung (8) für einen elektrischen Ladestecker (2) aufweist, und der Endeffektor (5) eine eigene automatische Zustelleinrichtung (9) für die Halterung (8) aufweist, wobei die Zustelleinrichtung (9) den elektrischen Ladestecker (2) automatisch mit einer Ladebuchse (3) am Fahrzeugs (4) kuppelt und ggf. zu entkuppelt und die Zustelleinrichtung (9) mindestens eine translatorisch und/oder rotatorisch bewegliche Zustelleinheit (15,17) aufweist, wobei die mindestens eine Zustelleinheit (15,17) einen steuerbaren Antrieb aufweist, **dadurch gekennzeichnet, dass** der Endeffektor (5) eine ein- und ausfahrbare Ausgleichseinrichtung (11) für den Ladestecker (2), insbesondere die Halterung (8), aufweist, die in mindestens einer Achse verstellbar ist und Relativbewegungen zwischen dem Fahrzeug (4) und der Positioniervorrichtung (6) beim Laden ausgleicht.

## Claims

1. End effector for an electrical charging device (1) for charging an electrical energy store of a vehicle (4), wherein the end effector (5) has a mount (8) for an electrical charging plug (2), and the end effector (5) has its own automatic adjustment device (9) for the mount (8) as well as a flange-like connection (21) for connection to a positioning apparatus (6) of the charging device (1), wherein the adjustment device (9) is designed to automatically couple and possibly uncouple the electrical charging plug (2) to/from a charging socket (3) on the vehicle (4) and the adjustment device (9) has at least one adjustment unit (15, 17) which can move in a translatory and/or rotational manner, wherein the at least one adjustment unit (15, 17) has a controllable drive, **characterized in that** the end effector (5) has a retractable and extendable compensation device (11) for the charging plug (2), in particular the mount (8), which compensation device can be adjusted in at least one axis and is designed to compensate for relative movements between the vehicle (4) and the positioning apparatus (6) during charging.

2. End effector according to Claim 1, **characterized in that** the compensation device (11) is connected upstream of the adjustment device (9) and has the connection (21) for connection to the positioning apparatus (6).

3. End effector according to Claim 1 or 2, **characterized in that** the compensation device (11) has a longitudinally adjustable compensation element (23), in particular a telescopic rod.

4. End effector according to one of Claims 1 to 3, **characterized in that** the compensation device (11) has a preferably automatically controllable locking means (24) for at least one specified position, in particular for its retracted position.

5. End effector according to one of the preceding claims, **characterized in that** the adjustment device (9) can be moved on one axis or on multiple axes and has an adjustment element (16) which is connected to the mount (8) .

6. End effector according to one of the preceding claims, **characterized in that** the end effector (5) has a detection device (10) for the charging socket (3).

7. End effector according to Claim 6, **characterized in that** the detection device (10) has an optical image recording device (18) and possibly a distance sensor (19) and possibly a lighting means (20).

8. End effector according to one of the preceding claims, **characterized in that** the mount (8) has a plug holder (12) which can be adapted to different charging plugs (2) or which is arranged such that it can be matched to a specific charging plug (2) and is exchangeable.

9. End effector according to Claim 3, **characterized in that** the longitudinally adjustable compensation element (23) is of passive design.

10. End effector according to Claim 9, **characterized in that** the longitudinally adjustable compensation element (23) has a spring apparatus (13), as a result of which the end effector (5) can be held or can be mounted in a starting position.

11. End effector according to Claim 9, **characterized in that** the starting position lies between an extended position and a retracted end position, preferably substantially in a central position.

12. End effector according to Claim 11, **characterized in that** the compensation device (11) or the compensation element (23) has at least two, preferably precisely two, end stops which define the extended position and the retracted end position.

13. Electrical charging device for charging an electrical energy store of a vehicle (4), **characterized in that** the charging device (1) has a positioning apparatus (6) which can be moved in a controlled manner on one axis or on multiple axes and has an end effector (5) according to at least one of Claims 1 to 12.

14. Electrical charging device according to Claim 13, **characterized in that** the charging device (1) is designed to generate oscillations or vibrations which act on the charging plug (2) during coupling and possibly decoupling, in particular to shake the charging plug (2) transversely or obliquely to the adjustment direction.

15. Method for automatically coupling an electrical charging plug (2) to a charging socket (3) on a vehicle (4) by means of an electrical charging device (1) and the charging device (1) has a positioning apparatus (6) which can be moved in a controlled manner on one axis or on multiple axes and has an end effector (5) which holds the charging plug (2), wherein the positioning apparatus (6) positions the end effector (5) having the charging plug (2) on the charging socket (3) and the end effector (5) then adjusts the charging plug (2) and couples it to the charging socket (3), wherein the positioning, adjustment and coupling are carried out automatically, in particular by means of preferably contactless detection of the charging socket (3) by a carried-along detection device (10), wherein the end effector (5) has a mount (8) for an electrical charging plug (2), and the end effector (5) has its own automatic adjustment device (9) for the mount (8), wherein the adjustment device (9) automatically couples and possibly decouples the electrical charging plug (2) to/from a charging socket (3) on the vehicle (4) and the adjustment device (9) has at least one adjustment unit (15, 17) which can be moved in a translatory and/or rotational manner, wherein the at least one adjustment unit (15, 17) has a controllable drive, **characterized in that** the end effector (5) has a retractable and extendable compensation device (11) for the charging plug (2), in particular the mount (8), which compensation device can be adjusted in at least one axis and compensates for relative movements between the vehicle (4) and the positioning apparatus (6) during charging.

## Revendications

1. Effecteur terminal pour un équipement de charge électrique (1) permettant de charger un accumulateur d'énergie électrique d'un véhicule (4), dans lequel l'effecteur terminal (5) présente un support (8) pour une fiche de charge électrique (2), et l'effecteur terminal (5) présente son propre équipement d'approche automatique (9) pour le support (8) ainsi qu'un raccord de type bride (21) pour la connexion à un dispositif de positionnement (6) de l'équipement de charge (1), dans lequel l'équipement d'approche (9) est réalisé pour accoupler automatiquement la fiche de charge électrique (2) à une prise de charge (3) sur le véhicule (4) et le cas échéant pour la désaccoupler de celle-ci, et l'équipement d'approche (9) présente au moins une unité d'approche (15, 17) mobile en translation et/ou en rotation, dans lequel ladite au moins une unité d'approche (15, 17) présente un entraînement pouvant être commandé,
**caractérisé en ce que** l'effecteur terminal (5) présente un équipement de compensation (11) pouvant être rentré et sorti pour la fiche de charge (2), en particulier le support (8), qui est réglable au niveau d'au moins un axe et est conçu pour compenser des mouvements relatifs entre le véhicule (4) et le dispositif de positionnement (6) lors de la charge.

2. Effecteur terminal selon la revendication 1, **caractérisé en ce que** l'équipement de compensation (11) est placé en amont de l'équipement d'approche (9) et présente le raccord (21) pour la connexion au dispositif de positionnement (6).

3. Effecteur terminal selon la revendication 1 ou 2, **caractérisé en ce que** l'équipement de compensation (11) présente un élément de compensation (23) réglable en longueur, en particulier une tige télescopique.

4. Effecteur terminal selon l'une quelconque des revendications 1 à 3, **caractérisé en ce que** l'équipement de compensation (11) présente un dispositif d'arrêt (24) de préférence à commande automatique pour au moins une position prédéfinie, en particulier pour sa position rentrée.

5. Effecteur terminal selon l'une quelconque des revendications précédentes, **caractérisé en ce que** l'équipement d'approche (9) est mobile au niveau d'un ou de plusieurs axes et présente un élément d'approche (16) relié au support (8) .

6. Effecteur terminal selon l'une quelconque des revendications précédentes, **caractérisé en ce que** l'effecteur terminal (5) présente un équipement de détection (10) pour la prise de charge (3).

7. Effecteur terminal selon la revendication 6, **caractérisé en ce que** l'équipement de détection (10) présente un équipement d'acquisition d'image optique (18) et le cas échéant un capteur de distance (19) ainsi que le cas échéant un éclairage (20).

8. Effecteur terminal selon l'une quelconque des revendications précédentes, **caractérisé en ce que** le support (8) présente un porte-fiche (12) qui peut être adapté à différentes fiches de charge (2) ou qui est adapté à une fiche de charge spécifique (2) et est disposé de manière échangeable.

9. Effecteur terminal selon la revendication 3, **caractérisé en ce que** l'élément de compensation (23) réglable en longueur est réalisé pour être passif.

10. Effecteur terminal selon la revendication 9, **caractérisé en ce que** l'élément de compensation (23) réglable en longueur présente un dispositif à ressort (13) de sorte que l'effecteur terminal (5) peut être maintenu ou stocké dans une position initiale.

11. Effecteur terminal selon la revendication 9, **caractérisé en ce que** la position initiale se situe entre une position sortie et une position d'extrémité rentrée, de préférence substantiellement dans une position centrale.

12. Effecteur terminal selon la revendication 11, **caractérisé en ce que** l'équipement de compensation (11) ou l'élément de compensation (23) présente au moins deux, de préférence exactement deux butées d'extrémité qui définissent la position sortie et la position d'extrémité rentrée.

13. Equipement de charge électrique permettant de charger un accumulateur d'énergie électrique d'un véhicule (4), **caractérisé en ce que** l'équipement de charge (1) présente un dispositif de positionnement (6) mobile de manière commandée au niveau d'un ou de plusieurs axes, pourvu d'un effecteur terminal (5) selon au moins l'une des revendications 1 à 12.

14. Equipement de charge électrique selon la revendication 13, **caractérisé en ce que** l'équipement de charge (1) est réalisé pour générer une oscillation ou une vibration agissant sur la fiche de charge (2) lors de l'accouplement ou le cas échéant du désaccouplement, en particulier pour secouer la fiche de charge (2) de manière transversale ou oblique par rapport à la direction d'approche.

15. Procédé permettant d'accoupler automatiquement une fiche de charge électrique (2) à une prise de charge (3) sur un véhicule (4) au moyen d'un équipement de charge électrique (1), et l'équipement de charge électrique (1) présente un dispositif de positionnement (6) mobile de manière commandée au niveau d'un ou de plusieurs axes, pourvu d'un effecteur terminal (5) maintenant la fiche de charge (2), dans lequel le dispositif de positionnement (6) positionne l'effecteur terminal (5) avec la fiche de charge (2) au niveau de la prise de charge (3), et l'effecteur terminal (5) rapproche ensuite du fiche de charge (2) et l'accouple à la prise de charge (3), dans lequel le positionnement, l'approche et l'accouplement sont effectués automatiquement, en particulier au moyen d'une détection de préférence sans contact de la prise de charge (3) par un équipement de détection (10) embarqué, dans lequel l'effecteur terminal (5) présente un support (8) pour une fiche de charge électrique (2), et l'effecteur terminal (5) présente son propre équipement d'approche automatique (9) pour le support (8), dans lequel l'équipement d'approche (9) accouple la fiche de charge électrique (2) automatiquement à une prise de charge (3) sur le véhicule (4) et la désaccouple de cas échéant, et l'équipement d'approche (9) présente au moins une unité d'approche (15, 17) mobile en translation et/ou en rotation, dans lequel ladite au moins une unité d'approche (15, 17) présente un entraînement pouvant être commandé,
**caractérisé en ce que** l'effecteur terminal (5) présente un équipement de compensation (11) pouvant être rentré et sorti pour la fiche de charge (2), en particulier le support (8), qui est réglable au niveau d'au moins un axe et compense des mouvements relatifs entre le véhicule (4) et le dispositif de positionnement (6) lors de la charge.
